# EUROPEAN PATENT APPLICATION

(11) **EP 4 507 406 A1**
(43) Date of publication of application: **12.02.2025**
(21) Application number: 23190493.9
(22) Date of filing: 09.08.2023
(51) Int. Cl.: H04W 60/00, H04W 72/25, H04W 72/40, H04W 92/18

(54) **QUALITY OF SERVICE FOR SIDE-LINK POSITIONING**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

A method, for example a computer-implemented method, for a terminal device, comprising: providing (100) first information (I-1) characterizing a mapping of at least one quality of service, QoS,- related parameter for sidelink-based positioning to a respective priority, and, optionally, using (102) the first information (I-1).

## Description

### Technical Field

The disclosure relates to a method for a terminal device.

The disclosure further relates to an apparatus for a terminal device.

### Summary

Exemplary embodiments relate to a method, for example a computer-implemented method, for a terminal device, comprising: providing first information characterizing a mapping of at least one quality of service, QoS,- related parameter for sidelink-based positioning to a respective priority, and, optionally, using the first information. In some embodiments, this may facilitate a coordination of resources used for the sidelink-based positioning, e.g. with resources that may be used for transmitting data over the sidelink.

In some embodiments, aspects of sidelink-based positioning may e.g. comprise one or more of: a) ranging, and/or b) relative positioning, c) absolute positioning.

In some embodiments, the terminal device may e.g. be a user equipment (UE) or a data transceiver modem, which, for example, may be associated with a mobile object such as e.g. a vehicle, for example car or truck or the like.

In some exemplary embodiments, the terminal device may be at least one of (or may, e.g., be associated with at least one of): an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle.

In some exemplary embodiments, the terminal device is based on and/or adheres at least partially to at least one third generation partnership project, 3GPP, radio standard such as 4G (fourth generation), 5G (fifth generation), 6G (sixth generation) or other radio access technology.

In some embodiments, the terminal device may be used, e.g., together with at least one further terminal device, for a sidelink-based positioning procedure, which may involve transmission of associated signaling over at least one sidelink interface to the further terminal device. In some embodiments, in addition to the transmission of signaling associated with the sidelink-based positioning procedure, data transmissions over the at least one sidelink interface to the further terminal device may occur.

In some embodiments, a shared resource pool is provided for sidelink transmissions, so that in some conventional approaches a conflict for resources used for the transmission of signaling associated with the sidelink-based positioning procedure and for data transmissions may occur. In some embodiments, the principle according to the embodiments enables to avoid or resolve such conflict.

In some embodiments, two or more resources pools may be provided, e.g., for sidelink transmissions, and may, e.g., be configured for at least one of: a) data, b) sidelink positioning protocol (SLPP), c) positioning signals.

In some embodiments, using the first information comprises at least one of: a) evaluating the priority associated with the at least one QoS-related parameter for (e.g., used for) the sidelink-based positioning with respect to a priority associated with data to be transmitted over the sidelink associated with, and/or b) comparing the priority associated with the at least one QoS-related parameter for the sidelink-based positioning with a priority associated with data to be transmitted over the sidelink.

In some embodiments, the method comprises: transmitting information associated with the sidelink-based positioning over the sidelink based on the first information.

In some embodiments, the method comprises at least one of: a) organizing the first information in a tabular form, and/or b) assigning the respective priority to the at least one QoS-related parameter.

In some embodiments, the method comprises assigning a resource type to the at least one QoS-related parameter, for example a resource type indicating that the at least one QoS-related parameter is a) associated with signalling, and/or b) not associated with data.

In some embodiments, the method comprises: providing an information element characterizing a precision, e.g., a required precision, associated with the sidelink-based positioning.

In some embodiments, the method comprises at least one of: a) processing first QoS-related rules associated with data, for example in a vehicle-to-everything, V2X, - layer, b) processing second QoS-related rules associated with the sidelink-based positioning, for example in the vehicle-to-everything, V2X, - layer, c) processing third QoS-related rules common for data and sidelink-based positioning.

In some embodiments, the method comprises at least one of: a) mapping, for example using a layer 2 procedure, information to be transmitted, which is associated with the sidelink-based positioning, to at least one bearer based on the first information, and/or b) mapping information to be transmitted, which is associated with data, to at least one bearer based on a priority associated with the data.

In some embodiments, the method comprises at least one of: a) mapping, for example using a layer 2 procedure, QoS information to be transmitted, e.g., priority, which is associated with the sidelink-based positioning, to at least one bearer based on the first information, and/or b) mapping information to be transmitted, which is associated with data, to at least one bearer based on QoS information to be transmitted, e.g., a priority associated with the data.

In some embodiments, the method comprises: providing rules, e.g. organized as a table, comprising a plurality of entries, wherein a first number of entries characterizes a priority of data-related services, and wherein a second number of entries characterizes a priority associated with sidelink-based positioning.

In some embodiments, one or more entries of the table are characterizing an identifier, e.g., ID, which, in some embodiments, includes QoS of data that, in some embodiments, can be extended, e.g., to include IDs that identify positioning requirements or overlaying indication for positioning requirements.

In some embodiments, a priority as e.g. expressed by a PQI value according to some planned and/or accepted standard may comprise 8 bits, wherein, in some embodiments, 6 bits are used, e.g., for current QoS IDs, and for 2 reserved bits.

In some embodiments, one or more values within the 6 bits, e.g., of the PQI value, may be defined, e.g. to be only for positioning. In other words, one or more of the values as characterized by the 6 bits of the PQI value may be defined to be only used for priority values associated with positioning.

Thus, some embodiments relate to using one or more of the values as characterized by the 6 bits of the PQI value for priority values associated with positioning.

In some embodiments, the ID may be expanded to, e.g., 8 bits, thus providing further priority values, which, in some embodiments, may e.g. be used for positioning, e.g. for representing priority values associated with positioning.

Thus, some embodiments relate to using an 8 bit ID, e.g., by expanding an ID associated with the PQI, thus e.g. providing further priority values that may be used for positioning, and, optionally, using at least some of the further priority values for positioning.

In some embodiments, at least one bit of the last two bits of the eight PQI bits may be used, e.g., to indicate explicitly a PQI value associated with positioning. In other words, in some embodiments, the PQI may use 6 bits (e.g., as presently, according to some planned and/or accepted standard), and the proposed indication according to some embodiments (e.g., for indicating explicitly a PQI value associated with positioning) uses one of the reserved bits.

Thus, some embodiments relate to using at least one bit, e.g. of the eight PQI bits, for indicating, e.g. explicitly indicating, a priority value, e.g., PQI value, that is associated with positioning.

In some embodiments, the method comprises: providing first rules, e.g. organized as a first table, comprising entries characterizing a priority of data-related services, providing further rules, e.g. organized as at least one further table, comprising entries characterizing a priority associated with at least one aspect of sidelink-based positioning.

Further exemplary embodiments relate to an apparatus for a terminal device, wherein the apparatus is configured to performing the method according to the embodiments.

Further exemplary embodiments relate to a terminal device comprising the apparatus according to the embodiments.

Further exemplary embodiments relate to a communication system comprising at least one of: a) an apparatus according to the embodiments, and/or b) a terminal device according to the embodiments.

Further exemplary embodiments relate to a computer program comprising instructions which, when the program is executed by a computer, cause the computer to carry out the method according to the embodiments.

Further exemplary embodiments relate to a computer-readable storage medium comprising instructions which, when executed by a computer, cause the computer to carry out the method according to the embodiments.

Further exemplary embodiments relate to a data carrier signal carrying and/or characterizing the computer program according to the embodiments.

Further exemplary embodiments relate to a use of the method according to the embodiments and/or of the apparatus according to the embodiments and/or of the terminal device according to the embodiments and/or of the communication system according to the embodiments and/or of the computer program according to the embodiments, and/or of the computer-readable storage medium according to the embodiments and/or of the data carrier signal according to the embodiments, for at least one of: a) mapping at least one quality of service, QoS,- related parameter for sidelink-based positioning, e.g., for signaling associated with the sidelink-based positioning, to a respective priority, b) comparing a priority associated with the at least one QoS-related parameter for the sidelink-based positioning with a priority associated with data, c) avoiding resource conflicts, e.g., between signaling for the sidelink-based positioning and data, d) using priorities and/or QoS information, e.g., priorities of same type, for coordinating a resource usage associated with sidelink transmissions for data and signaling for the sidelink-based positioning, e) resolving resource conflicts, e.g., between signaling for the sidelink-based positioning and data.

### Brief Description of Exemplary Figures

Some exemplary embodiments will now be described with reference to the accompanying drawings, in which:
- Fig. 1: schematically depicts a simplified flow-chart according to some embodiments,
- Fig. 2: schematically depicts a simplified block diagram according to some embodiments,
- Fig. 3: schematically depicts a simplified flow-chart according to some embodiments,
- Fig. 4: schematically depicts a simplified flow-chart according to some embodiments,
- Fig. 5: schematically depicts a simplified flow-chart according to some embodiments,
- Fig. 6: schematically depicts a simplified flow-chart according to some embodiments,
- Fig. 7: schematically depicts aspects of organizing information according to some embodiments,
- Fig. 8: schematically depicts a simplified flow-chart according to some embodiments,
- Fig. 9A: schematically depicts aspects of organizing information according to some embodiments,
- Fig. 9B: schematically depicts aspects of organizing information according to some embodiments,
- Fig. 9C: schematically depicts aspects of organizing information according to some embodiments,
- Fig. 10: schematically depicts a simplified block diagram according to some embodiments,
- Fig. 11: schematically depicts a simplified block diagram according to some embodiments,
- Fig. 12: schematically depicts aspects of use according to some embodiments.

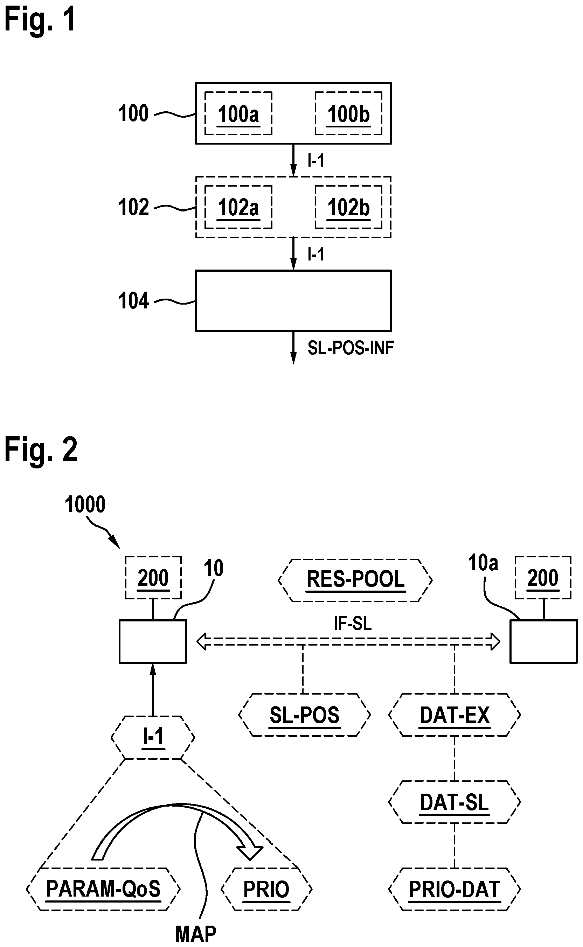

Exemplary embodiments, see Fig. 1, 2, relate to a method, for example a computer-implemented method, for a terminal device 10 (Fig. 2), comprising: providing 100 first information I-1 characterizing a mapping MAP of at least one quality of service, QoS,- related parameter PARAM-QoS for sidelink-based positioning SL-POS (e.g., for signaling associated with the sidelink-based positioning SL-POS ) to a respective priority PRIO, and, optionally, using 102 the first information. In some embodiments, this may facilitate a coordination of resources used for the sidelink-based positioning SL-POS, e.g. with resources that may be used for transmitting data over the sidelink.

In some embodiments, at least some, for example all, aspects of the method according to the embodiments may be performed by an apparatus 200.

In some embodiments, Fig. 2, the terminal device 10 may e.g. be a user equipment (UE) or a data transceiver modem, which, for example, may be associated with a mobile object such as e.g. a vehicle, for example car or truck or the like (not shown). In some embodiments, this may also apply to the further terminal device 10a.

In some exemplary embodiments, Fig. 2, the terminal device 10 may be at least one of (or may, e.g., be associated with at least one of): an loT (Internet of Things) device, an infrastructure component or part of an infrastructure component (e.g., traffic lights, street lights, traffic sign, toll gate), an industrial automation component, e.g. IIoT (Industrial loT) component or infrastructure (e.g., robots, machines, etc.), a device for a mobile broadband user, and/or a vehicle. In some embodiments, this may also apply to the further terminal device 10a.

In some exemplary embodiments, Fig. 2, the terminal device 10 is based on and/or adheres at least partially to at least one third generation partnership project, 3GPP, radio standard such as 4G (fourth generation), 5G (fifth generation), 6G (sixth generation) or other radio access technology, and may e.g. be used with a respective communication system 1000. In some embodiments, this may also apply to the further terminal device 10a.

In some embodiments, Fig. 2, the terminal device 10 may be used, e.g., together with the at least one further terminal device 10a, for a sidelink-based positioning procedure SL-POS, which may, e.g., involve transmission of associated signaling over at least one sidelink interface IF-SL, e.g. of the PC5 type, to the further terminal device 10a.

In some embodiments, e.g., in addition to the transmission of signaling and/or other information associated with the sidelink-based positioning procedure SL-POS, data exchange DAT-EX, e.g. transmissions and/or reception, over the at least one sidelink interface IF-SL to the further terminal device 10a may occur.

In some embodiments, Fig. 2, a shared resource pool RES-POOL is provided for sidelink information exchange, e.g. transmissions, wherein in some conventional approaches a conflict for resources used for the transmission of signaling associated with the sidelink-based positioning procedure SL-POS and for data transmissions, e.g., data exchange DAT-EX, may occur. In some embodiments, the principle according to the embodiments enables to avoid and/or resolve such conflict.

In some embodiments, Fig. 1, using 102 the first information I-1 comprises at least one of: a) evaluating 102a the priority PRIO (Fig. 2) associated with the at least one QoS-related parameter PARAM-QoS for (e.g., used for) the sidelink-based positioning SL-POS with respect to a priority PRIO-DAT associated with data DAT-SL to be transmitted over the sidelink, and/or b) comparing 102b the priority PRIO associated with the at least one QoS-related parameter PARAM-QoS for the sidelink-based positioning SL-POS with a priority PRIO-DAT associated with data DAT-SL to be transmitted over the sidelink, e.g. using the sidelink interface IF-SL.

In some embodiments, Fig. 1, the method comprises: transmitting 104 information SL-POS-INF associated with the sidelink-based positioning SL-POS over the sidelink, e.g., to the further terminal device 10a, based on the first information I-1.

In some embodiments, Fig. 1, the method comprises at least one of: a) organizing 100a the first information I-1, e.g., in a tabular form, and/or b) assigning the 100b respective priority PRIO to the at least one QoS-related parameter PARAM-QoS. In some embodiments, at least one of the organizing 100a and/or the assigning 100b may be performed in the providing block 100. Note that in some other embodiments, the first information I-1 may be organized in other form than the exemplarily mentioned tabular form.

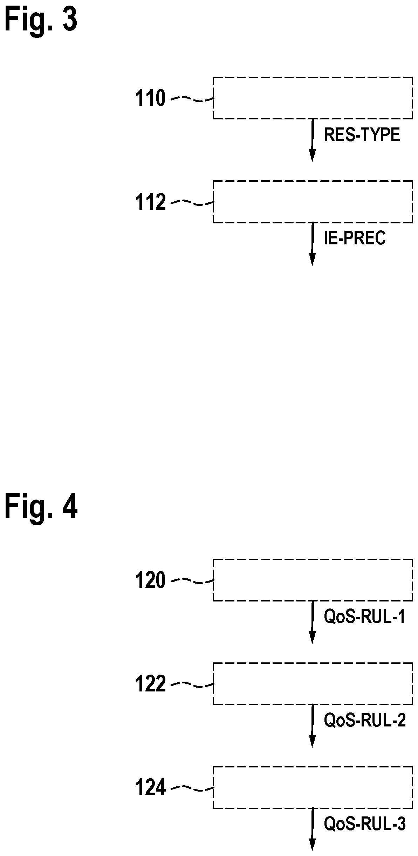

In some embodiments, Fig. 3, the method comprises: assigning 110 a resource type RES-TYPE to the at least one QoS-related parameter PARAM-QoS (Fig. 2), for example a resource type indicating that the at least one QoS-related parameter is a) associated with signalling, and/or b) not associated with data.

In some embodiments, Fig. 3, the method comprises: providing 112 an information element IE-PREC characterizing a precision associated with the sidelink-based positioning SL-POS.

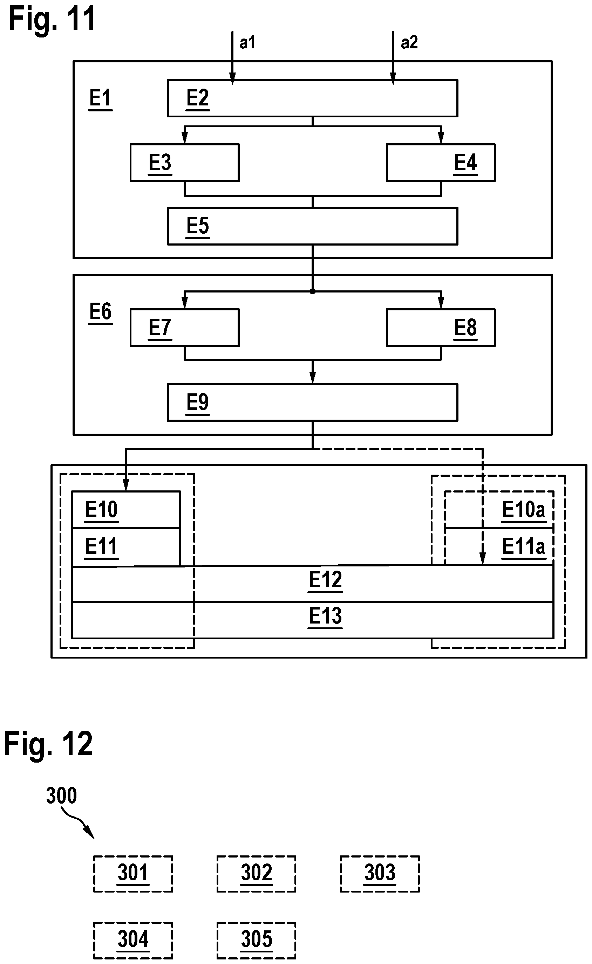

In some embodiments, Fig. 4, the method comprises at least one of: a) processing 120 first QoS-related rules QoS-RUL-1 associated with data DAT-SL (Fig. 2), for example in a vehicle-to-everything, V2X, - layer (see element E2 of Fig. 11), b) processing 122 (Fig. 4) second QoS-related rules QoS-RUL-2 associated with the sidelink-based positioning SL-POS, for example in the vehicle-to-everything, V2X, - layer (see element E2 of Fig. 11), c) processing 124 third QoS-related rules QoS-RUL-3 common for data DAT-SL and sidelink-based positioning SL-POS.

In some embodiments, at least one of the QoS-RUL-1, QoS-RUL-2, QoS-RUL-3 comprises at least one rule. In other words, in some embodiments, it is, for example, also possible that, e.g., the first QoS-related rules QoS-RUL-1, comprise a single rule, i.e., as opposed to a plurality of rules. In some embodiments, this may also apply to the other types of rules QoS-RUL-2, QoS-RUL-3.

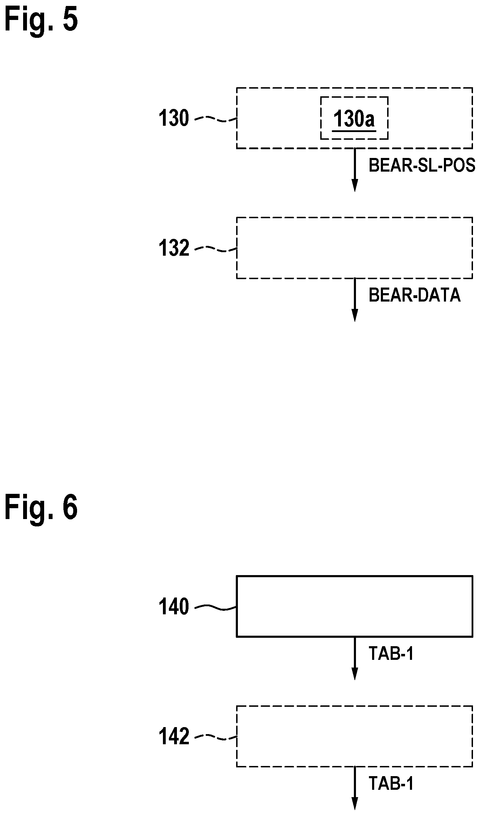

In some embodiments, Fig. 5, the method comprises at least one of: a) mapping 130, for example using a layer 2 procedure, information to be transmitted, which is associated with the sidelink-based positioning SL-POS, to at least one bearer BEAR-SL-POS based on the first information I-1, and/or b) mapping 132 information to be transmitted, which is associated with data DAT-SL, to at least one bearer BEAR-DATA based on a priority PRIO-DAT associated with the data DAT-SL.

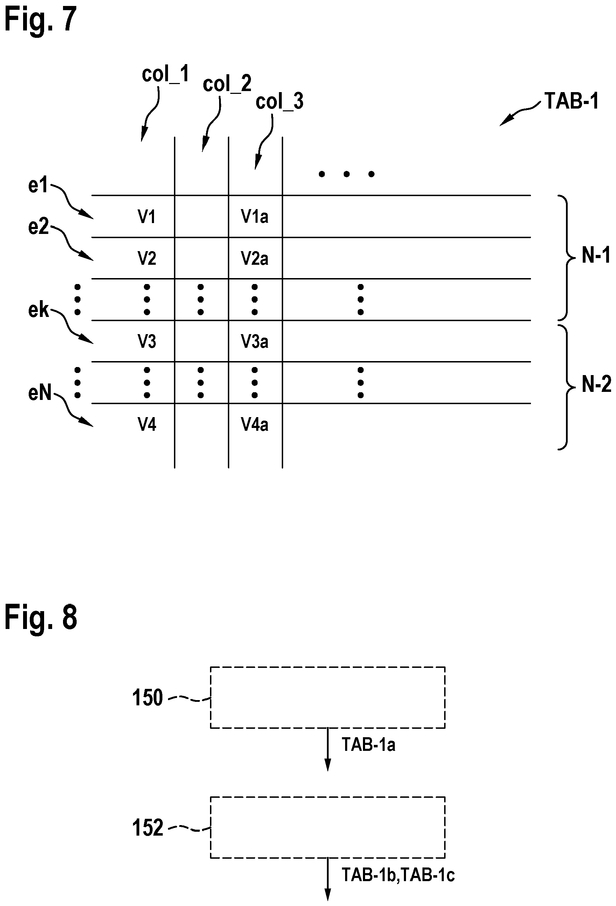

In some embodiments, Fig. 6, Fig. 7 the method comprises: providing 140 rules, e.g., organized as a table TAB-1, comprising a plurality of entries e1, e2, ..., ek, ..., eN, wherein a first number N-1 of entries e1, e2, ... characterizes a priority of data-related services (e.g., associated with data transmission over the sidelink), and wherein a second number N-2 of entries ek, ..., eN characterizes a priority associated with sidelink-based positioning SL-POS. In some embodiments, this enables assess priorities associated with the sidelink-based positioning SL-POS and data transmissions DAT-SL over the sidelink, e.g. comparing these priorities, e.g., for avoiding and/or resolving resource conflicts, e.g. of the shared resource pool RES-POOL (Fig. 2) that may be provided for sidelink transmissions in some embodiments. The optional block 142 of Fig. 6 symbolizes using the table TAB-1, e.g., for the assessing, e.g., comparing.

As an example, a first entry e1 of the table TAB-1 of Fig. 7 characterizes relations between a priority (as e.g. expressed by a PQI value), provided for example in column col_1, e.g. in the form of a priority value v1, and, for example, one or more properties such as QoS requirements associated with the priority, e.g. for a specific data-related service. Thus, in some embodiments, column col_3 may e.g. comprise a respective value via of a QoS parameter (e.g., delay budget) of the data-related service as characterized by entry e1. In some embodiments, in the second column col_2, a resource type (e.g., "data", e.g., with guaranteed bit rate, GBR, or "non-data") may be specified.

In some embodiments, the PQI value is a special 5QI, e.g., 5G QoS Identifier, as e.g. defined in clause 5.7.2.1 of 3GPP TS 23.501. Hence, in some embodiments, this PQI value may be used to characterize the priorities PRIO, PRIO-DAT. However, in some other embodiments, at least one other value or type of value, respectively, may be used to characterize the priorities PRIO, PRIO-DAT.

In some embodiments, an information content of, e.g., a specific column, which, e.g., characterizes a specific QoS parameter, may be interpreted based on whether the corresponding entry, e.g., row, of the table TAB-1 relates to data-related services or to positioning. As an example, if an entry e1 relates to data, a content of a column characterizing a specific QoS parameter may be interpreted as, e.g., "not available (NA)", whereas, if another entry ek relates to positioning, the content of the same column characterizing a specific QoS parameter may be interpreted as a precision value.

In some embodiments, more or less than the exemplarily depicted columns may be provided.

As a further example, a second entry e2 of the table TAB-1 of Fig. 7 may, likewise, characterize relations between a priority, provided for example in column col_1, e.g. in the form of a priority value v2, and, for example, one or more properties such as QoS requirements associated with the priority, e.g. for a specific (other) data-related service, e.g., different from the service associated with entry e1. Thus, in some embodiments, column col_3 may e.g. comprise a respective value v2a of a QoS parameter of the data-related service as characterized by entry e2.

In some embodiments, further entries ... may be provided in the first number N-1 of entries, e.g. characterizing further relations between priority and associated QoS parameters, e.g., for further data-related services.

As a further example, a k-th entry ek of the table TAB-1 of Fig. 7 characterizes relations between a priority, provided for example in column col_1, e.g. in the form of a priority value v3, and, for example, one or more properties such as QoS requirements associated with the priority, e.g. for a specific aspect of sidelink-based positioning. Thus, in some embodiments, column col_3 may e.g. comprise a respective value v3a of a QoS parameter of the specific aspect of sidelink-based positioning as characterized by entry ek. Similar observations apply to further entries eN of table TAB-1, being related to further values v4, v4a, and the like.

In some embodiments, aspects of sidelink-based positioning may e.g. comprise one or more of: a) ranging, and/or b) relative positioning, c) absolute positioning.

As can be seen, table TAB-1 of Fig. 7 enables to consider both aspects of data transmissions with associated priorities and aspects of sidelink-based positioning, e.g. signaling for sidelink-based positioning, with associated priorities, in a same table, thus e.g. facilitating prioritizing resource allocation for both aspects data/positioning, e.g., from the shared resource pool RES-POOL.

In some embodiments, Fig. 8, the method comprises: providing 150 first rules, e.g. organized as a first table TAB-1a, comprising entries characterizing a priority of data-related services, providing 152 further rules, e.g. organized as at least one further table TAB-1b, TAB-1c, comprising entries characterizing a priority associated with at least one aspect of sidelink-based positioning.

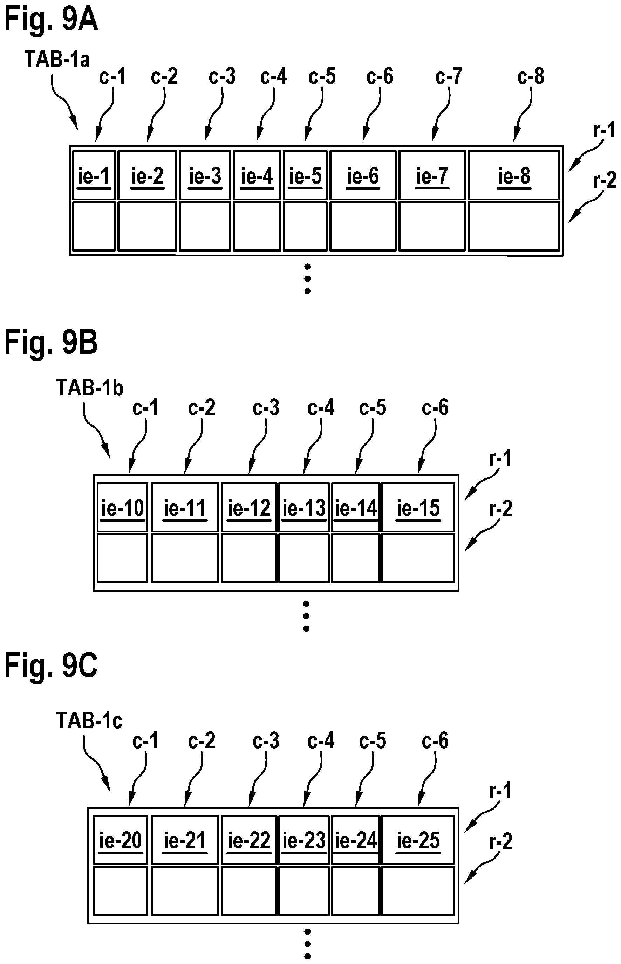

As an example, Fig. 9A schematically depicts aspects of organizing information according to some embodiments, e.g. in form of the first table TAB-1a. In some embodiments, the first table TAB-1a enables to consider aspects of data transmissions with associated priorities, but, for example, does not comprise aspects related to sidelink-based positioning.

In some embodiments, the first table TAB-1a may comprise one or more columns, for example eight columns c-1, c-2, c-3, c-4, c-5, c-6, c-7, c-8 (or at least some columns of the exemplarily explained eight columns), wherein column c-1 is e.g. associated with a priority value, wherein column c-2 is e.g. associated with a resource type, wherein column c-3 is e.g. associated with a default priority level, wherein column c-4 is e.g. associated with a packet delay budget, wherein column c-5 is e.g. associated with a packet error rate, wherein column c-6 is e.g. associated with a default maximum data burst volume, wherein column c-7 is e.g. associated with a default averaging window. An optional column c-8 may be provided in some embodiments, e.g. for specifying further information.

As an example, in some embodiments, for a data related service for platooning between terminal devices 10, 10a, the first row r-1 of the first table TAB-1a may e.g. comprise a first information element ie-1 in the first column c-1, e.g. specifying a priority value, e.g. a PQI value, of, e.g., "21". An information element ie-2 of column c-2, row-1 may e.g. specify a resource type, e.g. "GBR". An information element ie-3 of column c-3, row-1 may e.g. specify a default priority level of "3". An information element ie-4 of column c-4, row-1 may e.g. specify a packet delay budget of 20 milliseconds (ms). An information element ie-5 of column c-5, row-1 may e.g. specify a packet error rate of 10^(-4). An information element ie-6 of column c-6, row-1 may e.g. specify "not available" or "not defined" for the entry of row r-1. An information element ie-7 of column c-7, row-1 may e.g. specify a default averaging window of 2000 ms.

In some embodiments, the first table TAB-1a may comprise further entries, e.g., rows r-2, ..., which are not detailed for the sake of clarity.

In some embodiments, a second table TAB-1b as exemplarily depicted by Fig. 9B may be provided, e.g., according to block 152 of Fig. 8. In some embodiments, Fig. 9B, the second table TAB-1b enables to consider aspects related to sidelink-based positioning, e.g. sidelink positioning protocol (SLPP) transport, with associated priorities.

In some embodiments, the second table TAB-1b may comprise two or more columns, for example six columns c-1, c-2, c-3, c-4, c-5, c-6, wherein column c-1 is e.g. associated with a priority value (e.g., in form of a PQI value), wherein column c-2 is e.g. associated with a resource type, wherein column c-3 is e.g. associated with a default priority level, wherein column c-4 is e.g. associated with a packet delay budget, wherein column c-5 is e.g. associated with a packet error rate. An optional column c-6 may be provided in some embodiments, e.g. for specifying further information.

As an example, in some embodiments, for a SLPP transport related service, the first row r-1 of the second table TAB-1b may e.g. comprise a first information element ie-10 in the first column c-1, e.g. specifying a priority value, e.g. a PQI value, of, e.g., "21". An information element ie-11 of column c-2, row-1 may e.g. specify a resource type. An information element ie-12 of column c-3, row-1 may e.g. specify a default priority level of "3". An information element ie-13 of column c-4, row-1 may e.g. specify a packet delay budget of 100 milliseconds (ms). An information element ie-14 of column c-5, row-1 may e.g. specify a packet error rate of 10^(-2).

In some embodiments, Fig. 9B, the second table TAB-1b may comprise further entries, e.g., rows r-2, ..., which are not detailed for the sake of clarity.

In some embodiments, a further, e.g., third table TAB-1c as exemplarily depicted by Fig. 9C may be provided, e.g., according to block 152 of Fig. 8. In some embodiments, Fig. 9C, the third table TAB-1c enables to consider aspects related to sidelink-based ranging, with associated priorities.

In some embodiments, Fig. 9C, the third table TAB-1c may comprise at least two columns, for example, six columns c-1, c-2, c-3, c-4, c-5, c-6, wherein column c-1 is e.g. associated with a priority value (e.g., in form of a PQI value), wherein column c-2 is e.g. associated with default priority level, wherein column c-3 is e.g. associated with a positioning measurement latency, wherein column c-4 is e.g. associated with an accuracy and/or a confidence interval, wherein column c-5 is e.g. associated with a precision. An optional column c-6 may be provided in some embodiments, e.g. for specifying further information.

As an example, in some embodiments, for ranging, the first row r-1 of the third table TAB-1c may e.g. comprise a first information element ie-20 in the first column c-1, e.g. specifying a priority value, e.g. a PQI value, of, e.g., "21". An information element ie-21 of column c-2, row-1 may e.g. specify a default priority level of, e.g., "3". An information element ie-22 of column c-3, row-1 may e.g. specify a positioning measurement latency of, e.g., 10 ms. An information element ie-23 of column c-4, row-1 may e.g. specify an accuracy of, e.g., 1m and/or a confidence interval of 95%. An information element ie-24 of column c-5, row-1 may e.g. specify a precision of, e.g., 0.3m.

In some embodiments, Fig. 9C, the third table TAB-1c may comprise further entries r-2, ..., which are not detailed for the sake of clarity.

In some embodiments, one or more of the tables TAB-1a, TAB-1b, TAB-1c may be used, e.g. for evaluating priorities of data-related services and/or of positioning related services, wherein resources for associated sidelink transmissions, e.g. from the shared resource pool RES-POOL, may be determined thus avoiding conflicts and, e.g., considering priorities of different services.

In some embodiments, the information presented in relation to the exemplary tables of Fig. 7, 9A, 9B, 9C may be organized in any other form, e.g., other than tables, e.g., in the form of rules and/or associations of information, wherein, for example, both priorities PRIO, PRIO-DAT associated with QoS,- related parameter(s) PARAM-QoS for sidelink-based positioning SL-POS and with data transmissions DAT-SL can be considered, e.g., evaluated.

As an example, in some embodiments, an existing table according to some planned and/or accepted standard, e.g. comprising a proposed and/or standardized PQI to QoS characteristics mapping, as e.g. provided by Table 5.4.4-1 of 3GPP TS 23.287, may be enhanced using the principle according to the embodiments, e.g., by adding further entries to the Table 5.4.4-1 of 3GPP TS 23.287, the further entries e.g. relating to mappings of QoS,- related parameter(s) PARAM-QoS for sidelink-based positioning SL-POS to a respective priority PRIO as e.g. characterized by the PQI value column (column 1) of this table.

As a further example, while the conventional Table 5.4.4-1 of 3GPP TS 23.287 may, for example, already comprise first entries as exemplarily characterized above by reference sign N-1 of Fig. 7, e.g., a first number N-1 of entries e1, e2, ... characterizing a priority of data-related services (e.g., associated with data transmission over the sidelink), it does not provide for entries characterizing a priority associated with sidelink-based positioning SL-POS. In some embodiments, this aspect of entries characterizing a priority associated with sidelink-based positioning SL-POS may be added to the conventional table 5.4.4-1 of 3GPP TS 23.287, thus enabling to efficiently assess priorities related to different types of QoS requirements or different types of transmissions (e.g., data vs. positioning).

In some embodiments, the method comprises: using one or more values of a priority indicator, e.g. of a PQI value, for priority values associated with positioning, for example using one or more values as characterized by a number of, e.g. 6, bits, of the priority indicator, e.g. of the PQI value, for priority values associated with positioning. A PQI can be preferably understood as a PC5 5G NR Standardized QoS Identifier as introduced in 3GPP Release 16.

In some embodiments, the method comprises at least one of: a) using an identifier comprising a predetermined number of, e.g. 8, bits, and/or b) expanding an identifier associated with and/or representing a PQI value, for example to provide further priority values that may be used for positioning, c) using at least some of the further priority values associated with an expanded identifier for positioning.

In some embodiments, the method comprises at least one of: using at least one bit of an identifier, e.g. a PQI, for indicating, e.g. explicitly indicating, that a priority value encoded by the identifier, e.g., PQI, e.g., encoded by some other bits of the identifier, e.g., PQI, is associated with positioning.

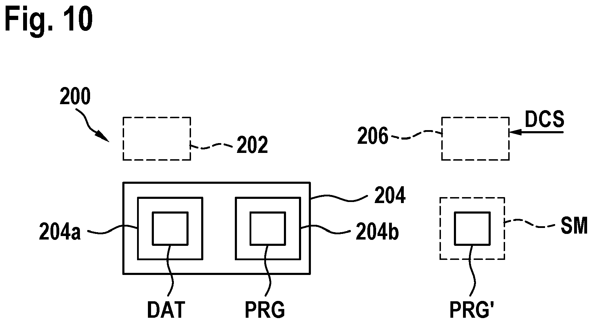

Further exemplary embodiments, Fig. 10, relate to an apparatus 200 for a terminal device 10, 10a, wherein the apparatus 200 is configured to perform the method according to the embodiments.

In some embodiments, Fig. 2, the apparatus 200 may be provided for the terminal device 10, 10a, wherein, in some embodiments, the apparatus 200 or its functionality may, e.g., be integrated into the terminal device 10, 10a.

In some embodiments, Fig. 10, the apparatus 200 comprises at least one calculating unit, e.g. processor, 202 and at least one memory unit 204 associated with (i.e., usable by) the at least one calculating unit 202, e.g. for at least temporarily storing a computer program PRG and/or data DAT, wherein the computer program PRG is e.g. configured to at least temporarily control an operation of the apparatus 200, e.g. for (e.g., within) at least one terminal device 10, 10a, such as e.g. the execution of a method according to some embodiments.

In some embodiments, the at least one calculating unit 202 comprises at least one core (not shown) for executing the computer program PRG or at least parts thereof, e.g. for executing the method according to the embodiments or at least one or more steps and/or other aspects thereof.

In some embodiments, the at least one calculating unit 202 may comprise at least one of the following elements: a microprocessor, a microcontroller, a digital signal processor (DSP), a programmable logic element (e.g., FPGA, field programmable gate array), an ASIC (application specific integrated circuit), hardware circuitry, a tensor processor, a graphics processing unit (GPU). In some embodiments, any combination of two or more of these elements is also possible.

In some embodiments, the memory unit 204 comprises at least one of the following elements: a volatile memory 204a, e.g. a random-access memory (RAM), a non-volatile memory 204b, e.g. a Flash-EEPROM.

In some embodiments, the computer program PRG is at least temporarily stored in the non-volatile memory 204b. Data DAT (e.g. associated with the first information I-1), which may e.g. be used for executing the method according to some embodiments, may at least temporarily be stored in the RAM 204a.

In some embodiments, an optional computer-readable storage medium SM comprising instructions, e.g. in the form of a further computer program PRG', may be provided, wherein the further computer program PRG', when executed by a computer, i.e. by the calculating unit 202, may cause the computer 202 to carry out the method according to the embodiments. As an example, the storage medium SM may comprise or represent a digital storage medium such as a semiconductor memory device (e.g., solid state drive, SSD) and/or a magnetic storage medium such as a disk or hard disk drive (HDD) and/or an optical storage medium such as a compact disc (CD) or DVD (digital versatile disc) or the like.

In some embodiments, Fig. 10, the apparatus 200 may comprise an optional data interface 206, e.g. for bidirectional data exchange with an external device (not shown). As an example, by means of the data interface 206, a data carrier signal DCS may be received, e.g. from the external device, for example via a wired or a wireless data transmission medium, e.g. over a (virtual) private computer network and/or a public computer network such as e.g. the Internet.

In some embodiments, Fig. 10, the data carrier signal DCS may represent or carry the computer program PRG, PRG' according to the embodiments, or at least a part thereof.

Some embodiments, Fig. 10, relate to a computer program PRG, PRG' comprising instructions which, when the program is executed by a computer 202, cause the computer 202 to carry out the method according to the embodiments.

Further exemplary embodiments, Fig. 2, relate to a terminal device 10, 10a comprising the apparatus 200 according to the embodiments.

Further exemplary embodiments, Fig. 2, relate to a communication system 1000 comprising at least one of: a) an apparatus 200 according to the embodiments, and/or b) a terminal device 10, 10a according to the embodiments.

Fig. 11 schematically depicts a simplified block diagram according to some embodiments. Element E1 symbolizes a data processing associated with a V2X (vehicle-to-everything) layer E2, wherein arrow a1 symbolizes V2X packets (e.g., data packets) provided to the V2X layer E2, wherein arrow a2 symbolizes exemplary positioning requests, as e.g. provided by location services, LCS, wherein element E3 symbolizes QoS rules associated with transport, e.g., data transmission, wherein element E4 symbolizes QoS rules associated with positioning, e.g. related to the sidelink, i.e., PC5 positioning, and wherein element E5 symbolizes optional common rules, e.g., QoS rules that may e.g. be applicable to any of data transmission and/or positioning. In some embodiments, the V2X layer may e.g. process, e.g. filter, different QoS rules for positioning and/or for transport (e.g., data).

Element E6 symbolizes a layer 2 processing according to some embodiments, wherein element E7 symbolizes a mapping of PC5 related transport QoS parameters to a priority, e.g. similar to the priority PRIO-DAT of Fig. 2, wherein element E8 symbolizes a mapping of positioning QoS parameters or rules, respectively, to a priority PRIO (Fig. 2). Element E9 symbolizes a mapping of QoS rules to bearers.

In some embodiments, the layer 2 processing E6 may e.g. be provided by an SDAP (Service Data Adaptation Protocol) entity, e.g., enhancing a conventional SDAP entity by the functionality according to the embodiments.

In some embodiments, the layer 2 processing E6 of Fig. 10 may e.g. use the principle according to the embodiments, e.g. providing and/or evaluating the first information I-1, see, for example, element E8.

Element E10 symbolizes a PDCP (packet data convergence protocol) processing or entity, respectively, associated with a first sidelink radio bearer, element E11 symbolizes a radio link control, RLC (Radio Link Control), processing or entity, respectively, associated with the first sidelink radio bearer. Similarly, element E10a symbolizes a PDCP processing or entity, respectively, associated with a second sidelink radio bearer, element E11a symbolizes a radio link control processing or entity, respectively, associated with the second sidelink radio bearer. Element E12 symbolizes a MAC (Medium Access Layer) layer or processing or corresponding entity, respectively.

In some embodiments, the exemplary configuration of Fig. 11 may e.g. be implemented by the apparatus 100, e.g. for the terminal device 10, 10a, e.g., within the terminal device 10, 10a.

In some embodiments, the principle according to the embodiments e.g. enables to extend an existing handling, e.g., mapping of priorities, e.g., in the form of PQI, e.g., V2X PQI, to QoS parameters, e.g. extending an existing V2X PQI handling scheme, e.g., table (e.g., Table 5.4.4-1 of 3GPP TS 23.287), e.g., to include the positioning QoS and a respective mapping from the positioning QoS to associated priorities, e.g. in the form of PQI values. In some embodiments, a mapping of transport QoS (e.g., end-to-end, E2E, latency) and/or accuracy and/or precision requirements (e.g., characterizing a number of measurements and/or a used bandwidth) may be provided, and, e.g., an indication how critical positioning is, e.g. to an associated application.

In some embodiments, the principle according to the embodiments enables to attain the advantage of solving a potential conflict for resources between the data and positioning signaling, e.g., with respect to the shared resource pool RES-POOL (Fig. 2).

As mentioned above, e.g. with reference to the exemplary table of Fig. 7, in some embodiments, at least some of Data QoS and/or SLPP transport QoS and/or ranging QoS may be provided in a same, e.g., single, mapping scheme, e.g. in the form of a, e.g. one single, table, e.g. a PQI table, see, for example, the table of Fig. 7.

As also mentioned above, e.g. with reference to the exemplary tables of Fig. 9A, 9B, 9C, two or more tables may be provided, e.g., either with a same PQI / priority, and/or with different PQI and/or priority.

In some embodiments, at least some services, for example each service, have/has a data and a positioning priority (e.g., PQI) to QoS mapping. In some embodiments, the positioning QoS may e.g. be related to SLPP transport and/or to ranging.

In some embodiments, e.g., if two or more tables are used, see, e.g., Fig. 9A, 9B, 9C, and if, for example, PQI values are reused across the tables, in some embodiments, a label may be provided, e.g. to enable lower layers to know what kind of packet they are dealing with. In some embodiments, the label may be provided implicitly (e.g., lower layers detect the type of packet), or explicitly.

In some embodiments, e.g., if two or more tables are used, see, e.g., Fig. 9A, 9B, 9C, a priority value, e.g., PQI value, can be similar for the three values or types: Data, SLPP Transport, and positioning report. In some other embodiments, the PQI of different tables may be different.

In some embodiments, a higher layer may convey at least one of: a) a priority of SL positioning and/or SLPP transport, and/or b) a remaining latency budget, and/or c) an accuracy, and/or d) a confidence interval, and/or e) a precision, which, in some embodiments, may e.g. be used, e.g., by lower layers, e.g. to set the pattern settings associated with at least one of: A) position reference signal, PRS, pattern, and/or B) comb structure, and/or C) PRS frequency.

In some embodiments, a range as e.g. described in TS 23.287, §5.4.2.4, may also be used for positioning QoS, and may e.g. be sent together with a PQI value.

In some embodiments, when sending a positioning request, an initiating entity may provide the PQI value characterizing a priority PRIO, e.g., together with the positioning request (wherein the request as such is, e.g., specified by 3GPP TR 23.700, 6.13.2).

In some embodiments, the priority PRIO (Fig. 2) may e.g. be used for a resource allocation.

In some embodiments, a single QoS, which may e.g. comprise both transport and positioning, may be considered for a service. In some embodiments, at least one priority, i.e., layer 1 (L1) priority, may comprise, e.g., eight levels, and may be considered, e.g., for at least one, e.g. some, e.g. each entry (which, in some embodiments, are considering a single (e.g., comparable) priority for data and positioning). In some embodiments, herein, "comparable" means that, while mapping to a SL radio bearer, Layer 2 may be able to compare, e.g., a transport layer data request priority to an LCS positioning layer request priority, and may for example map the respective requests to a same or different bearer.

In some embodiments, the mapping to a radio bearer can be done in, e.g., an SDAP (Service Data Adaptation Protocol) layer or another L2 layer, e.g., considering associated priority(ies) of each of transport data and/or positioning LCS request.

In some embodiments, e.g., after mapping to a radio bearer, and if both data and transport are mapped to a same bearer, an L2 layer, e.g., MAC, can use the priorities associated with each of the two different request, e.g., to prioritize a transmission of any of these requests, and/or to associate the two requests together (e.g., in the same slots/allocation) and/or to drop and/or delay any of the two requests, e.g., according to their priority levels.

In some other embodiments, two QoS entries may be specified for each service, e.g., one for transport data and one for positioning. In some embodiments, the specified priorities can be scaled equally (e.g., using a comparable 8 levels) or differently (e.g., for positioning, e.g. "only", 4 priority values and for transport data, e.g., 8 priority values) for different aspect, e.g., one for positioning and the other for transport.

In some embodiments, Fig. 11, a mapping to a radio bearer can be done in, e.g., the SDAP layer or another L2 layer entity E6, e.g. considering the associated priority(ies) of each of Transport data and/or positioning (e.g., LCS) request, wherein for example two different QoS flow rule entries may be filtered in an L2 layer (e.g., SDAP) entity E6.

In some embodiments, the mapping to a radio bearer can be done in, e.g., the SDAP layer or another L2 layer E6 considering the two different associated priority(ies) of each of Transport data (see element PRIO-DAT of Fig. 2) and/or positioning LCS request (see element PRIO of Fig. 2), e.g., considering a comparable priority mapping criteria, e.g., the example of 4 Priority levels of positioning and 8 for transport:
P1 positioning > than P1, P2, P3 transport,
P2 positioning = P4,
P3 Positioning = P5,
P4 Positioning < than P6, P7, and P8

In some embodiments, further examples and/or rule(s) can be given.

In some embodiments, e.g., if one service, e.g. a second service "S2", comes after another service, e.g., a first service "S1", checking for the priorities and/or considering the priorities for, e.g., at least, a resource allocation procedure may be performed. As an example, if the priorities are respectively P1 and P2 for service S1 and service S2, and if at least one of these two services is a positioning request, in some embodiments, the following may apply:
If the channel is congested:
If P2 > P1, then S2 can replace S1.
If P2 < P1, then S2 can be down-prioritized.

Further exemplary embodiments, Fig. 12, relate to a use 300 of the method according to the embodiments and/or of the apparatus 200 according to the embodiments and/or of the terminal device 10, 10a according to the embodiments and/or of the communication system 1000 according to the embodiments and/or of the computer program PRG, PRG' according to the embodiments, and/or of the computer-readable storage medium SM according to the embodiments and/or of the data carrier signal DCS according to the embodiments, for at least one of: a) mapping 301 at least one quality of service, QoS,- related parameter for sidelink-based positioning, e.g., for signaling associated with the sidelink-based positioning, to a respective priority, b) comparing 302 a priority PRIO associated with the at least one QoS-related parameter PARAM-QoS for the sidelink-based positioning with a priority PRIO-DAT associated with data DAT-SL, c) avoiding 303 resource conflicts, e.g., between signaling for the sidelink-based positioning and data, d) using 304 priorities, e.g., priorities of same type, for coordinating a resource usage associated with sidelink transmissions for data and signaling for the sidelink-based positioning, e) resolving 305 resource conflicts, e.g., between signaling for the sidelink-based positioning and data.

In some embodiments, the principle according to the embodiments enables to solve or avoid resource conflicts, e.g., with priorities accounting for a positioning QoS set, e.g. by a V2X application in sidelink, e.g., only.

As a further example, in some embodiments, Fig. 2, the terminal device 10 may receive a Ranging/SL positioning service request, e.g., as defined in some planned and/or accepted standard, such as, e.g., 3GPP TR 23.700, wherein the Ranging/SL positioning service request may e.g. specify a required QoS for the requested Ranging/SL positioning service. In some embodiments, the first information I-1 may be provided which characterizes a mapping MAP of the required QoS for the requested Ranging/SL positioning service, e.g. as may be characterized by the QoS,- related parameter PARAM-QoS, to the respective priority PRIO, which may e.g. be characterized as a PQI value. Thus, QoS requirements of the Ranging/SL positioning service request, e.g., in terms of priority, may be compared to other services, e.g. either data-related or positioning related.

## Claims

1. A method, for example a computer-implemented method, for a terminal device (10; 10a), comprising: providing (100) first information (I-1) characterizing a mapping (MAP) of at least one quality of service, QoS,-related parameter (PARAM-QoS) for sidelink-based positioning (SL-POS) to a respective priority (PRIO), and, optionally, using (102) the first information (I-1).

2. The method according to claim 1, wherein using (102) the first information (I-1) comprises at least one of:
a) evaluating (102a) the priority (PRIO) associated with the at least one QoS-related parameter (PARAM-QoS) for the sidelink-based positioning (SL-POS), e.g. used for the sidelink-based positioning (SL-POS), with respect to a priority (PRIO-DAT) associated with data (DAT-SL) to be transmitted over the sidelink, and/or
b) comparing (102b) the priority (PRIO) associated with the at least one QoS-related parameter (PARAM-QoS) for the sidelink-based positioning (SL-POS), e.g. used for the sidelink-based positioning (SL-POS), with a priority (PRIO-DAT) associated with data (DAT-SL) to be transmitted over the sidelink.

3. The method according to any of the preceding claims, comprising:
transmitting (104) information (SL-POS-INF) associated with the sidelink-based positioning (SL-POS) over the sidelink based on the first information (I-1).

4. The method according to any of the preceding claims, comprising at least one of:
a) organizing (100a) the first information (I-1) in a tabular form, and/or
b) assigning (100b) the respective priority (PRIO) to the at least one QoS-related parameter (PARAM-QoS),
c) indicating a priority associated with the at least one QoS-related parameter (PARAM-QoS) for the sidelink-based positioning (SL-POS) using an identifier, e.g., a PQI.

5. The method according to any of the preceding claims, comprising assigning (110) a resource type (RES-TYPE) to the at least one QoS-related parameter (PARAM-QoS), for example a resource type indicating that the at least one QoS-related parameter (PARAM-QoS) is
a) associated with signaling, and/or
b) not associated with data.

6. The method according to any of the preceding claims, comprising: providing (112) an information element (IE-PREC) characterizing a, for example required, precision associated with the sidelink-based positioning (SL-POS).

7. The method according to any of the preceding claims, comprising at least one of:
a) processing (120) first QoS-related rules (QoS-RUL-1) associated with data, for example in a vehicle-to-everything, V2X, - layer (E2),
b) processing (122) second QoS-related rules (QoS-RUL-2) associated with the sidelink-based positioning (SL-POS), for example in the vehicle-to-everything, V2X, - layer (E2),
c) processing (124) third QoS-related rules (QoS-RUL-3) common for data and sidelink-based positioning (SL-POS).

8. The method according to any of the preceding claims, comprising at least one of:
a) mapping (130), for example using (130a) a layer 2 procedure, information to be transmitted, which is associated with the sidelink-based positioning (SL-POS), to at least one bearer (BEAR-SL-POS) based on the first information (I-1), and/or
b) mapping (132) information to be transmitted, which is associated with data, to at least one bearer (BEAR-DAT) based on QoS information comprising, e.g., a priority (PRIO-DAT) associated with the data.

9. The method according to any of the preceding claims, comprising: providing (140) rules, e.g. organized as a table (TAB-1), comprising a plurality of entries (e1, e2, ..., eN), wherein a first number (N-1) of entries characterizes a priority of data-related services, and wherein a second number (N-2) of entries characterizes a priority associated with sidelink-based positioning (SL-POS).

10. The method according to any of the preceding claims, comprising: providing (150) first rules, e.g. organized as a first table (TAB-1a), comprising entries characterizing a priority of data-related services, providing (152) further rules, e.g. organized as at least one further table (TAB-1b, TAB-1c), comprising entries characterizing a priority associated with at least one aspect of sidelink-based positioning (SL-POS).

11. The method according to any of the preceding claims, comprising: using one or more values of a priority indicator, e.g. of a PQI value, for priority values associated with positioning, for example using one or more values as **characterized by** a number of, e.g. 6, bits, of the priority indicator, e.g. of the PQI value, for priority values associated with positioning.

12. The method according to any of the preceding claims, comprising at least one of:
a) using an identifier comprising a predetermined number of, e.g. 8, bits, and/or
b) expanding an identifier associated with and/or representing a PQI value, for example to provide further priority values that may be used for positioning, and/or
c) using at least some of the further priority values associated with an expanded identifier for positioning.

13. The method according to any of the preceding claims, comprising: using at least one bit of an identifier, e.g. a PQI, for indicating, e.g. explicitly indicating, that a priority value encoded by the identifier, e.g., PQI, e.g., encoded by some other bits of the identifier, e.g., PQI, is associated with positioning.

14. An apparatus (200) for a terminal device (10; 10a), wherein the apparatus (200) is configured to perform the method according to at least one of the preceding claims.

15. A use (300) of the method according to at least one of the claims 1 to 13 and/or of the apparatus (200) according to claim 14, for at least one of: a) mapping (301) at least one quality of service, QoS,- related parameter (PARAM-QoS) for sidelink-based positioning (SL-POS), e.g., for signaling associated with the sidelink-based positioning, to a respective priority (PRIO), b) comparing (302) a priority (PRIO) associated with the at least one QoS-related parameter (PARAM-QoS) for the sidelink-based positioning (SL-POS) with a priority associated with data, c) avoiding (303) resource conflicts, e.g., between signaling for the sidelink-based positioning (SL-POS) and data, d) using (304) priorities, e.g., priorities of same type, for coordinating a resource usage associated with sidelink transmissions for data and signaling for the sidelink-based positioning (SL-POS), e) resolving (305) resource conflicts, e.g., between signaling for the sidelink-based positioning (SL-POS) and data.
